# EUROPEAN PATENT SPECIFICATION

(11) **EP 0 581 416 B1**
(45) Date of publication and mention of the grant of the patent: **06.08.1997**
(21) Application number: 93303789.7
(22) Date of filing: 17.05.1993
(51) Int. Cl.: G08B 21/00

(54) **Alarm for reminding users of negligently left portable cellular telephone**
Alarm zur Erinnerung an ein verlegtes tragbares Zelltelefon
Alarme pour rappeler l'oubli d'un téléphone portatif cellulaire

(30) Priority: 29.07.1992 US 921240
(43) Date of publication of application: 02.02.1994
(73) Proprietor: Yang, Ren-Guey, Tapei City (TW)
(72) Inventor: Yang, Ren-Guey, Tapei City (TW)
(74) Representative: MacGregor, Gordon

(56) References cited:
- US-A- 5 086 290
- MOTOROLA TECHNICAL DEVELOPMENTS vol. 13 , July 1991 , SCHAUMBURG, ILLINOIS US page 133 J.D.GOLDSBERRY ET AL 'LOST OR STOLEN RADIO OPTION'
- ELEKTOR ELECTRONICS vol. 7, no. 7/8 , July 1981 , CANTERBURY GB pages 64 - 65 'forget-me-not-transmitter; forget-me-not-receiver'

## Description

The present invention relates to an alarm for reminding users of a negligently left portable cellular telephone, and more particularly to a distance-based alarm specially designed for portable cellular telephones.

One of the most important things in today's society is the effective control and efficient use of time. The wide adoption and utilization of portable cellular telephones is one example of this tendency. While portable cellular telephones provide a high degree of convenience in telephone communication, they have some inconveniences associated with their practical use, also. While portable cellular telephones are a transportable article, having reduced volume and weight, they are not suitable for putting in a pocket. A user has to hold or carry the portable cellular telephone with him or her whenever and wherever he or she wants to use it. The negligence of users may cause them to leave behind their portable cellular telephone somewhere, where it may become lost and thereby result in considerable financial loss to the users.

It is therefore desirable to provide an alarm which may remind a user of the fact that he or she negligently left behind a portable cellular telephone, and therefore prevent an unnecessary loss.

US patent number 5 086 290 discloses a mobile perimeter monitoring system which includes a battery powered transmitter adapted to be placed upon a person to be monitored which the system user carries a receiver. The receiver responds to a code transmitted by the transmitter and provides an indication of whether the receiver is within or outside the effective range of the transmitter.

The publication "Motorola Technical Developments", vol. 13, July 1991, page 133, entitled "Lost or Stolen Radio Option", by J D Goldsberry et al, discloses an alarm for a portable radio. The portable radio scans for a signal from a transmitter device and, if no signal is detected, an alert tone is produced. After a certain time, the portable begins sending emergency packets to set off an alarm.

The publication "Elektor Electronics", vol. 7, no. 7/8, July/Aug. 1981, pages 64-65, entitled "Forget-me-not transmitter" and "Forget-me-not receiver" disclose a transmitter for items such as baggage and a small receiver. If the distance between the transmitter and receiver exceeds a certain range the receiver enables an alarm oscillator.

### SUMMARY OF THE INVENTION

The invention provides an alarm system for use with portable cellular telephones in accordance with Claim 1 of the appended claim.

The present invention is substantially composed of a super-high-frequency, short-distance receiving circuit and associated detection and warning circuits. Whenever a portable cellular telephone is left behind, and the owner travels a distance greater than that which the receiving circuit can detect the oscillating control signals generated by the cellular phone, the warning circuit of the alarm is activated. The warning may either be by synthetic speech through a speaker, by a buzzer, or by a vibration motor. Thereby, the user or owner is reminded to return and retrieve his or her portable cellular telephone, before it is lost.

The alarm according to the present invention includes a super-high-frequency short-distance receiver which may receive local oscillatory signals emitted by the portable cellular telephone itself. Whenever the portable cellular telephone is left behind, and the user who carries the alarm of the present invention travels beyond a predetermined distance, the alarm's receiver will become unable to receive the local oscillatory signals from the portable cellular telephone. the alarm will then be automatically activated to remind the user of the possible loss of the portable cellular telephone by an output of a speech signal, a buzz, or a vibrational warning.

The structure, characteristics and other objects of the present invention can be best understood by referring to the following detailed description of the preferred embodiment and the accompanying drawings, wherein:

### BRIEF DESCRIPTION OF THE DRAWINGS

FIG. 1 is a block diagram of the present invention; and
FIG. 2 is a detailed circuit diagram of the present invention.

### DETAILED DESCRIPTION OF THE PREFERRED EMBODIMENTS

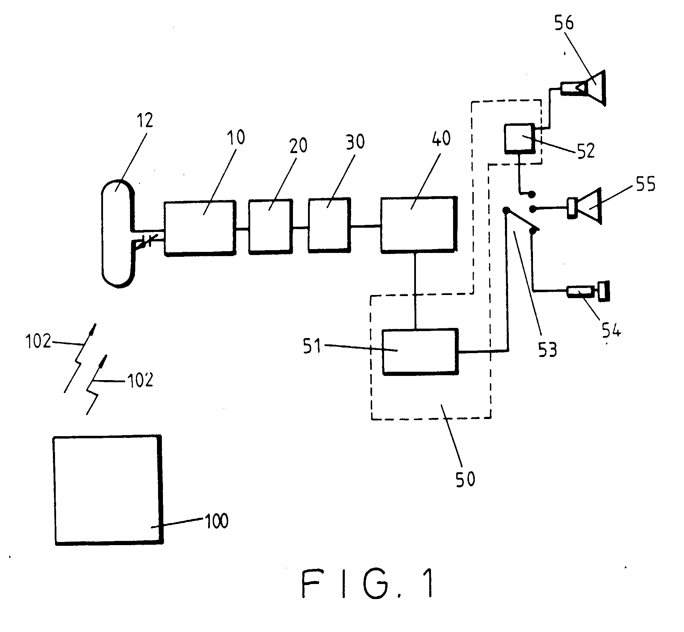

Referring to FIG. 1, an alarm for reminding users of a negligently left portable cellular telephone is shown. The alarm is mainly a wireless receiver and warning device and is capable of receiving a local oscillatory signal emitted by the portable cellular telephone itself. Furthermore, the alarm generates warning signals when it is at a position beyond the distance which it is capable of receiving the above-mentioned local oscillatory signal from the portable cellular telephone. In other words, the alarm is capable of determining when the distance between the user who carries the alarm and the portable cellular telephone exceeds a predetermined distance, by giving warning signals, and thus prevents the portable cellular telephone from being carelessly lost.

The alarm is composed of a radio-frequency amplifying circuit 10, a down converter 20, a wave detection circuit 30, a differentiation circuit 40, and a warning IC 50. the radio-frequency amplifying circuit 10, the down converter 20, and the wave detection circuit 30 together form a super-high-frequency receiving circuit to receive the local oscillatory control signals 102 transmitted by the portable cellular telephone 100. The received signals are then amplified by the differentiation circuit 40 and output to the warning integrated circuit (IC) 50. the warning IC 50 substantially comprises a warning sound generator 51 and a speech generator 52. The warning sound generator 51 has an output terminal coupled to a selector switch 53, which further has two selector output terminals separately connecting a buzzer 55 and a vibration motor 54, and a third selector output terminal connecting the output of generator 51 to the speech generator 52. A speaker 56 is connected to an output terminal of the speech generator 52.

A relative short distance, from one to a couple of meters, can be preset as the effective receiving distance for the aforesaid receiving circuit. Whenever the portable cellular telephone 100 is within the preset effective distance of the receiving circuit, control signals 102 transmitted from the portable cellular telephone 100 can be properly received by the receiving circuit and is amplified by the differentiation circuit 40, to output a low level signal to the warning IC 50 and thereby not actuating the warning IC 50, which prevents actuation of the selected alarm output device 56, 55, 54. When the portable cellular telephone 100 is left at a location beyond the preset effective distance of the receiving circuit, then the signals 102 from portable cellular telephone 100 cannot be received, and the warning IC 50 will be enabled, causing the warning sound generator 51 to generate an output signal. This output signal further causes either the vibration motor 54 to vibrate, the buzzer 55 to generate a warning sound, or the speech generator 52 to provide a voice speech prompt to speaker 56, depending upon the position of the selector switch 53.

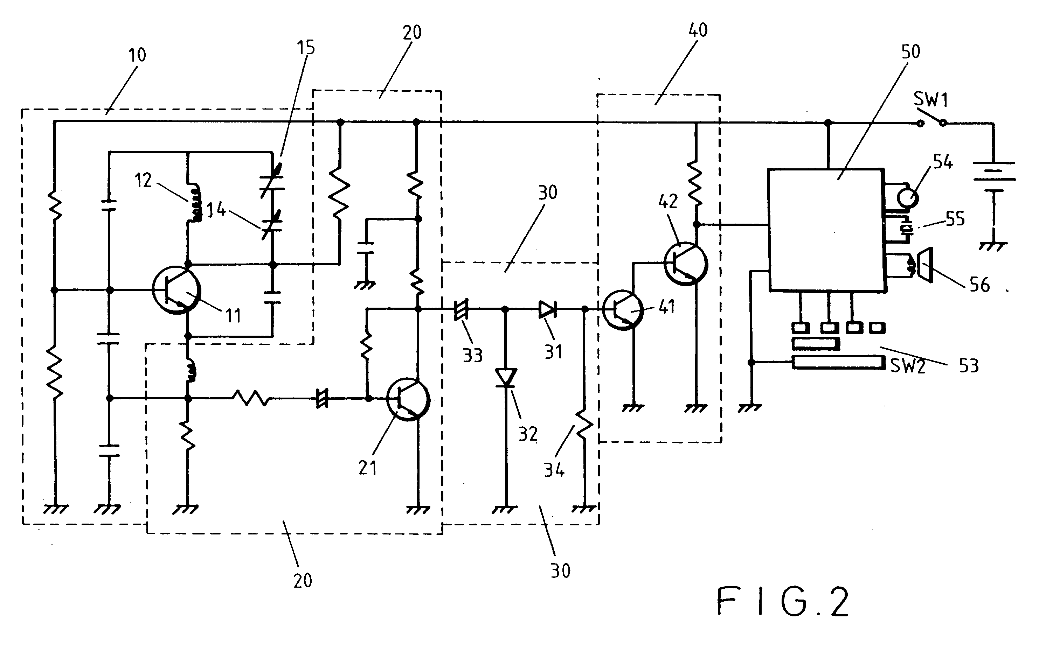

Referring now to FIG. 2, a detailed circuit structure of the present invention is shown. The radio-frequency amplifying circuit 10 consists of a first transistor 11, an antenna 12 at an adequate peripheral position, variable capacitors 14, 15, fixed capacitors, and associated resistances. Signals received by the alarm are first resonated in a resonance network composed of the aforesaid fixed and variable capacitors 14, 15. Then, the signals at the resonate frequency are amplified by the transistor 11, and coupled to the down converter 20. Down converter 20 is composed of several passive elements, inductance, resistance, and capacitance, and a second transistor 21 for frequency reduction and signal amplifying. the radio-frequency in the signal is then coupled to the detection circuit 30, composed of wave detection diodes 31, 32, a capacitance 33, and a resistance 34 to remove the R.F. carrier from the signal. The low frequency signal output from detector 30 is coupled to differentiator 40.

The differentiation circuit 40 is composed of two serially connected transistors 41, 42, serving as an electronic switch, to be on or off depending on the existence of output signals from the detector circuit 30. The output terminal of the differentiation circuit 40 is connected to the input control terminal of the warning IC 50. shown below the warning IC 50, is the selector switch 53 and its associated contact points. Shown to the right of the warning IC 50, are the output terminals separately connecting the vibration motor 54, the buzzer 55, and the speaker 56.

When the portable cellular telephone is within the effective distance for receiving the cellular phone' transmitted control signals, an output signal will be coupled from the detection circuit 30 to the differentiation circuit 40, causing the transistors 41 and 42 to conduct, whereby the differentiation circuit 40 output will be at low potential. Thus, the warning IC 50 will thereby be inactive. When the portable cellular telephone is beyond the preset effective distance for receiving the transmitted signals, the differentiation circuit transistors 41, 42 are off. The output of circuit 40 will be a high potential, and its output enables the warning IC 50 to actuate one of the signal mechanisms selected by the selector switch 53.

Frequency trimming and adjustment can be accomplished using the two variable capacitors 14, 15 of the radio-frequency amplifying circuit 10, the adjustment depending on the type of portable cellular telephone. The alarm can therefore be adjusted to receive any local oscillatory control signal transmitted by the portable cellular telephone.

The alarm of the present invention is compact and simple in structure and is conveniently portable by putting it in a pocket or attaching it to user's waistband, allowing it to detect the portable cellular telephone within its effective receiving distance at any time.

## Claims

1. An alarm system for use with portable cellular telephones of the type transmitting radio frequency control signals to a base station when the cellular telephones are in an inactive state, comprising:
a portable cellular telephone (100), said portable telephone (100) transmitting said radio frequency control signals (102);
means for receiving a radio frequency signal (10,20,30); and
means for producing a warning signal when said receiving means (10,20,30) is beyond a predetermined range from said portable cellular telephone (100),
characterised in that
said means for receiving a radio frequency signal (10,20,30) comprises a super high-frequency, short distance receiving circuit for receiving said radio frequency control signals (102) transmitted by said portable telephone (100) within a predetermined range of said portable telephone (100), said receiving means (10,20,30) generating a first output signal responsive to receipt of said radio frequency control signals (102); and said means for producing a warning signal comprises:
differentiation means (40) having an input coupled to said receiving means (30) for receiving said first output signal, said differentiation means (40) discriminating said first output signal to generate a second output signal responsive to an absence of said first control signal when said receiving means (10,20,30) is beyond said predetermined range of said portable cellular telephone (100); and,
warning circuit means (50) having an input coupled to said differentiation means (40) for receiving said second output signal and generating an actuation signal responsive thereto, said warning circuit means (50) including signalling means (51,52) for generating an alarm signal responsive to said actuation signal, said actuation signal being coupled to a selector switch (53) having multiple contact points being connected to respective output terminals for selectively connecting said actuation signal to one of a vibration motor (54), a buzzer (55), and a speech generation circuit (52) for producing said alarm signal to remind a user that said portable cellular telephone (100) is no longer within said predetermined range.

2. The alarm system as recited in Claim 1 where said receiving means (10,20,30) includes:
an antenna (12) for receiving said radio frequency control signals (102);
an amplifier (10) coupled to said antenna (12) for amplifying said received radio frequency control signals (102);
a down converter circuit (20) coupled to an output of said amplifier (10) for converting said amplified radio frequency control signals (102) to a predetermined lower frequency; and,
a detection circuit (30) coupled to an output of said down converter (20) for providing said first output signal to said differentiation means (40).

3. The alarm system as recited in Claim 1 where said differentiation means (40) is defined by a transistor switch circuit (41,42).

4. The alarm system as recited in Claim 2 where said amplifier (10) includes a plurality of variable capacitors (14,15) for adjusting an amplification frequency bandwidth thereof.

## Patentansprüche

1. Alarmsystem zur Verwendung mit tragbaren Zellulartelefonen der Art, die Funkfrequenzsteuersignale zu einer Basisstation senden, wenn die Zellulartelefone in einem inaktiven Zustand sind, umfassend:
ein tragbares Zellulartelefon (100), wobei das genannte Telefon (100) die genannten Funkfrequenzsteuersignale (102) sendet;
ein Mittel zum Empfangen eines Funkfrequenzsignals (10, 20, 30); und
ein Mittel zum Erzeugen eines Warnsignals, wenn sich das genannte Empfangsmittel (10, 20, 30) außerhalb einer vorbestimmten Entfernung von dem genannten tragbaren Zellulartelefon (100) befindet;
dadurch gekennzeichnet, daß
das genannte Mittel zum Empfangen eines Funkfrequenzsignals (10, 20, 30) eine Superhochfrequenz-Kurzstreckenempfangsschaltung zum Empfangen der genannten, von dem genannten tragbaren Telefon (100) gesendeten Funkfrequenzsteuersignale (102) innerhalb einer bestimmten Entfernung von dem genannten tragbaren Telefon (100) umfaßt, wobei das genannte Empfangsmittel (10, 20, 30) ein erstes Ausgangssignal generiert, das auf den Empfang der genannten Funkfrequenzsteuersignale (102) anspricht; und wobei das genannte Mittel zur Erzeugung eines Warnsignals folgendes umfaßt:
ein Differenzierungsmittel (40) mit einem Eingang, der mit dem genannten Empfangsmittel (30) zum Empfangen des genannten ersten Ausgangssignals gekoppelt ist, wobei das genannte Differenzierungsmittel (40) das genannte erste Ausgangssignal diskriminiert, um ein zweites Ausgangssignal zu generieren, das auf die Abwesenheit des genannten ersten Steuersignals reagiert, wenn sich das genannte Empfangsmittel (10, 20, 30) außerhalb der genannten vorbestimmten Entfernung des genannten tragbaren Zellulartelefons (100) befindet; und
eine Warnschaltung (50) mit einem Eingang, der mit dem genannten Differenzierungsmittel (40) zum Empfangen des genannten zweiten Ausgangssignals und zum Generieren eines darauf ansprechenden Betätigungssignals gekoppelt ist, wobei die genannte Warnschaltung (50) ein Signalisierungsmittel (51, 52) zum Generieren eines auf das genannte Betätigungssignal ansprechenden Alarmsignals aufweist, wobei das genannte Betätigungssignal mit einem Auswahlschalter (53) gekoppelt ist, bei dem mehrere Kontaktpunkte mit jeweiligen Ausgangsanschlüssen verbunden sind, um das genannte Betätigungssignal selektiv mit einem Vibrationsmotor (54), einem Summer (55) oder einer Sprachgeneratorschaltung (52) zu verbinden, um das genannte Alarmsignal zu erzeugen, um einen Benutzer daran zu erinnern, daß sich der genannte tragbare Zellulartelefon (100) nicht mehr innerhalb der genannten vorbestimmten Entfernung befindet.

2. Alarmsystem nach Anspruch 1, wobei das genannte Empfangsmittel (10, 20, 30) folgendes umfaßt:
eine Antenne (12) zum Empfangen der genannten Funkfrequenzsteuersignale (102);
einen Verstärker (10), der mit der genannten Antenne (12) gekoppelt ist, um die genannten empfangenen Funkfrequenzsteuersignale (102) zu verstärken;
eine Empfangsumsetzerschaltung (20), die mit einem Ausgang des genannten Verstärkers (10) gekoppelt ist, um die genannten verstärkten Funkfrequenzsteuersignale (102) in eine bestimmte tiefere Frequenz umzuwandeln; und
eine Erfassungsschaltung (30), die mit einem Ausgang des genannten Empfangsumsetzers (20) gekoppelt ist, um das genannte erste Ausgangssignal zu dem genannten Differenzierungsmittel (40) bereitzustellen.

3. Alarmsystem nach Anspruch 1, bei dem das genannte Differenzierungsmittel (40) durch einen Transistorschaltkreis (41, 42) definiert wird.

4. Alarmsystem nach Anspruch 2, bei dem der genannte Verstärker (10) eine Mehrzahl von variablen Kondensatoren (14, 15) zum Einstellen von dessen Verstärkungsfrequenzbandbreite aufweist.

## Revendications

1. Un système d'alarme à utiliser avec des téléphones cellulaires portatifs du type qui transmet des signaux de contrôle en radiofréquences à une station de base lorsque les téléphones cellulaires sont à l'état inactif, comprenant:
un téléphone cellulaire portatif (100), ledit téléphone portatif (100) transmettant lesdits signaux de contrôle en radiofréquences (102);
un moyen pour recevoir un signal en radiofréquence (10,20,30); et
un moyen pour produire un signal d'avertissement lorsque ledit moyen récepteur (10,20,30) est au-delà d'une portée prédéterminée dudit téléphone cellulaire portatif (100),
caractérisé en ce que
ledit moyen pour recevoir un signal en radiofréquence (10,20,30) comprend un circuit en hyperfréquences sur courte distance pour recevoir lesdits signaux de contrôle en radiofréquences (102) transmis par ledit téléphone portatif (100) dans les limites d'une portée prédéterminée dudit téléphone portatif (100), ledit moyen récepteur (10,20,30) produisant un premier signal de sortie en réponse à la réception desdits signaux de contrôle en radiofréquences (102); et ledit moyen pour produire un signal d'avertissement comprend:
un moyen différenciateur (40) ayant une entrée accouplée audit moyen récepteur (30) pour recevoir ledit premier signal de sortie, ledit moyen différenciateur (40) discriminant ledit premier signal de sortie pour produire un second signal de sortie en réponse à l'absence dudit premier signal de contrôle lorsque ledit moyen récepteur (10,20,30) est au-delà de ladite portée prédéterminée dudit téléphone cellulaire portatif (100); et,
un moyen de circuit d'avertissement (50) ayant une entrée accouplée audit moyen différenciateur (40) pour recevoir ledit second signal de sortie et produire un signal d'actionnement en réponse à celui-ci, ledit moyen de circuit d'avertissement (50) incluant un moyen de signalisation (51,52) pour produire un signal d'alarme en réponse audit signal d'actionnement, ledit signal d'actionnement étant accouplé à un sélecteur (53) ayant des points de contact multiples étant connectés à des bornes de sortie respectives pour connecter sélectivement ledit signal d'actionnement à l'un des dispositifs consistant en un moteur à vibration (54), un avertisseur sonore (55) ou un circuit d'émission de parole (52) pour produire ledit signal d'alarme afin de rappeler à l'utilisateur que ledit téléphone cellulaire portatif (100) n'est plus dans les limites de ladite portée prédéterminée.

2. Le système d'alarme tel que revendiqué dans la revendication 1, dans lequel ledit moyen récepteur (10,20,30) inclut:
une antenne (12) pour recevoir lesdits signaux de contrôle en radiofréquences (102);
un amplificateur (10) accouplé à ladite antenne (12) pour amplifier lesdits signaux de contrôle en radiofréquences reçus (102);
un circuit convertisseur abaisseur (20) accouplé à une sortie dudit amplificateur (10) pour convertir lesdits signaux de contrôle en radiofréquences amplifiés (102) à une fréquence inférieure prédéterminée; et
un circuit de détection (30) accouplé à une sortie dudit convertisseur abaisseur (20) pour fournir ledit premier signal de sortie audit moyen différenciateur (40).

3. Le système d'alarme tel que revendiqué dans la revendication 1, dans lequel ledit moyen différenciateur (40) est défini par un circuit de commutation à transistors (41,42).

4. Le système d'alarme tel que revendiqué dans la revendication 2, dans lequel ledit amplificateur (10) inclut une pluralité de condensateurs variables (14,15) pour ajuster une largeur de bande de fréquence d'amplification du même.
